Europäisches Patentamt

European Patent Office

Office européen des brevets

(19)

(11) Numéro de publication: **0 273 023**
**A2**

# (12) DEMANDE DE BREVET EUROPEEN

(21) Numéro de dépôt: **87870186.1**

(22) Date de dépôt: **17.12.87**

(51) Int. Cl.⁴: **F 16 H 29/16**

(30) Priorité: **17.12.86 BE 217542**

(43) Date de publication de la demande:
**29.06.88 Bulletin 88/26**

(84) Etats contractants désignés: **DE FR GB IT**

(71) Demandeur: **Libens, Guy Mathieu**
**Avenue de l'Observatoire, 209/71**
**B-4000 Liège (BE)**

**Vermoesen, Camille Francis**
**Avenue du Cor de Chasse, 11**
**B-1170 Bruxelles (BE)**

(72) Inventeur: **Meunier, Jean-Henri**
**rue Jean Bollen, 96**
**B-1020 Bruxelles (BE)**

(74) Mandataire: **De Brabanter, Maurice et al**
**Bureau VANDER HAEGHEN 63 Avenue de la Tolson d'Or**
**B-1060 Bruxelles (BE)**

(54) **Organe de transmission à variation progressive du rapport de réduction et stabilisation automatique de couple.**

(57) Un premier plateau (3) entraîné en rotation par un arbre (7), comporte des patins articulés (15) auto-agrippants unidirectionnels, enfermés dans une chambre circulaire (14) pratiquée dans un second plateau (8) disposé en front du premier (3).

L'axe (L,L') du premier plateau (3) peut être éloigné de l'axe (7) du plateau secondaire (8) par pivotement d'un support d'un angle variable alpha. Dans ce cas chaque patin (15) est animé d'une vitesse angulaire variable, et chacun d'eux à tour de rôle pendant une portion de tour entraîne le second plateau (8) à la vitesse la plus grande.

Un différentiel planétaire (10) opère la différence entre la vitesse d'entrée et la vitesse du second plateau (8), la résultante étant la vitesse variable (ns) de l'arbre de sortie (9).

FIG. 4

EP 0 273 023 A2

**Description**

## ORGANE DE TRANSMISSION A VARIATION PROGRESSIVE DU RAPPORT DE REDUCTION ET STABILISATION AUTOMATIQUE DE COUPLE

La présente invention est relative à un organe de transmission à variation progressive du rapport de réduction et stabilisation automatique de couple comprenant un boîtier, un premier plateau monté mobile dans le boîtier et relié au moteur d'entraînement par l'intermédiaire d'un premier train d'engrenage et un second plateau disposé en face du premier et solidaire d'un arbre de sortie par l'intermédiaire d'un second train d'engrenages.

Elle est destinée principalement en construction automobile, à remplacer avantageusement la boîte de vitesse conventionnelle à rapports étagés, par un organe de transmission permettant de changer de vitesse de façon continue. Elle trouve également de nombreuses applications comme organe de transmission à variation progressive du rapport de réduction en construction mécanique.

On connaît un organe de transmission par adhérence constitué d'un plateau de diamètre prédéterminé, entraîné en rotation autour d'un axe, par un galet parallèle à cet axe et qui s'appuie contre un flanc du disque. En modifiant progressivement la distance entre le galet et l'axe du plateau, on varie de façon continue le rapport de transmission.

L'inconvénient de ce dispositif connu réside dans l'obtention à partir d'une vitesse nulle de l'arbre de sortie, d'une croissance progressive de cette vitesse.

L'utilisation d'un plateau et galet cylindrique provoque le glissement de certaines parties en contact ou de ces éléments, car les points du plateau en contact avec le galet tournent à des vitesses circonférentielles différentes suivant qu'ils sont plus ou moins éloignés de l'axe.

D'autre part, les "boîtes de vitesse" manuelless ou automatiques conventionnelles actuellement utilisées en automobile possèdent un certain nombre de rapports étagés. Le couple maximum d'un moteur se situe à une vitesse de rotation déterminée. Pendant la progression en vitesse d'un véhicule, ce couple maximum n'est transmis aux roues qu'une seule fois dans chacun des rapports.

La consommation minimum se situe à l'instant où le couple est à son maximum. Pendant la période de démarrage, la consommation est en dents de scie et passe par son minimum une seule fois dans chaque rapport de boîte.

La puissance d'un moteur est proportionnelle à la vitesse angulaire et au couple. Un moteur libère cette puissance à une vitesse de rotation déterminée. Avec une boîte conventionnelle, cette puissance maximum ne peut être transmise qu'une seule fois dans chaque rapport pendant la montée en vitesse du véhicule.

La présente invention a pour but de supprimer les inconvénients découlant du nombre limité de rapports de réduction dans les boîtes conventionnelles. L'invention, telle qu'elle est caractérisée dans les revendications, concerne un organe de transmission à variation progressive du rapport de réduction et stabilisation automatique de couple comprenant un boîtier, un premier plateau mobile dans le boîtier et relié au moteur d'entraînement par l'intermédiaire d'un premier train d'engrenage et un second plateau disposé en face du premier et solidaire d'un arbre de sortie par l'intermédiaire d'un second train d'engrenage essentiellement caractérisé en ce que le premier plateau est monté articulé autour d'un pignon d'entraînement de manière à permettre que soit modifié, par pivotement, l'excentrement du premier plateau par rapport au second plateau et en ce que le premier plateau est muni sur une face voisine du second plateau, d'un ensemble de patins auto-agrippants unidirectionnels, répartis uniformément dans une cavité annulaire concentrique aménagée à la périphérie du second plateau, chacun des patins étant solidarisés au premier plateau par une série de bielles individuelles articulées d'une part audit patin et d'autre part au premier plateau, en des points d'articulation répartis uniformément à la périphérie du premier plateau.

Un tel organe de transmission permet une augmentation progressive et continue de la vitesse de sortie à partir d'une vitesse nulle ou une diminution progressive et continue jusqu'à une vitesse nulle, tout en permettant de maintenir le régime de rotation du moteur inchangé.

Pendant la période de démarrage du véhicule, la régulation automatique maintient le régime de rotation du moteur à une valeur prédéterminée correspondant par exemple à celle du couple maximum ou de la puissance maximum ou à tout autre régime souhaité.

Un deuxième avantage réside dans le fait que tout système d'embrayage est inutile étant donné que la progression en vitesse se fait à partir de zéro.

Ce variateur n'est pas spécifiquement lié à un seul type de moteur, parce qu'il offre une infinité de rapports de réduction : seule la consigne de régulation automatique devra être modifiée en fonction des caractéristiques du moteur et du véhicule envisagés.

Selon une particularité de l'invention, chaque patin comporte un sabot unidirectionnel destiné à agripper le second plateau lorsqu'il tend à présenter une composante de vitesse, dans une direction et un sens prédéterminé, inférieure à celle du patin.

Un coupleur hydraulique permet avantageusement d'obtenir un freinage moteur efficace.

Ces particularités et d'autres particularités et détails de l'invention apparaîtront au cours de la description détaillée suivante, en faisant référence aux dessins annexés au présent mémoire qui illustrent un mode de réalisation particulier d'un organe de transmission selon l'invention.

**Dans ces dessins :**

- la figure 1 est une vue en coupe d'un organe de transmission selon l'invention ;

- la figure 2 est une vue schématique en plan du dispositif montré à la figure 1;

- la figure 3 est une vue en élévation latérale des premier et second plateaux en position concentrique solidaires l'un de l'autre par des patins ;

- la figure 4 est une vue analogue à celle de la figure 3 lorsque le premier plateau est excentré par rapport au second plateau ;

- la figure 5 est une vue en coupe d'un patin ;

- la figure 6 est un schéma de montage d'un régulateur de vitesse ;

- la figure 7 est une vue schématique d'un organe de transmission selon l'invention muni d'un coupleur hydraulique, d'un servomoteur et du régulateur de vitesse illustré à la figure 6 ;

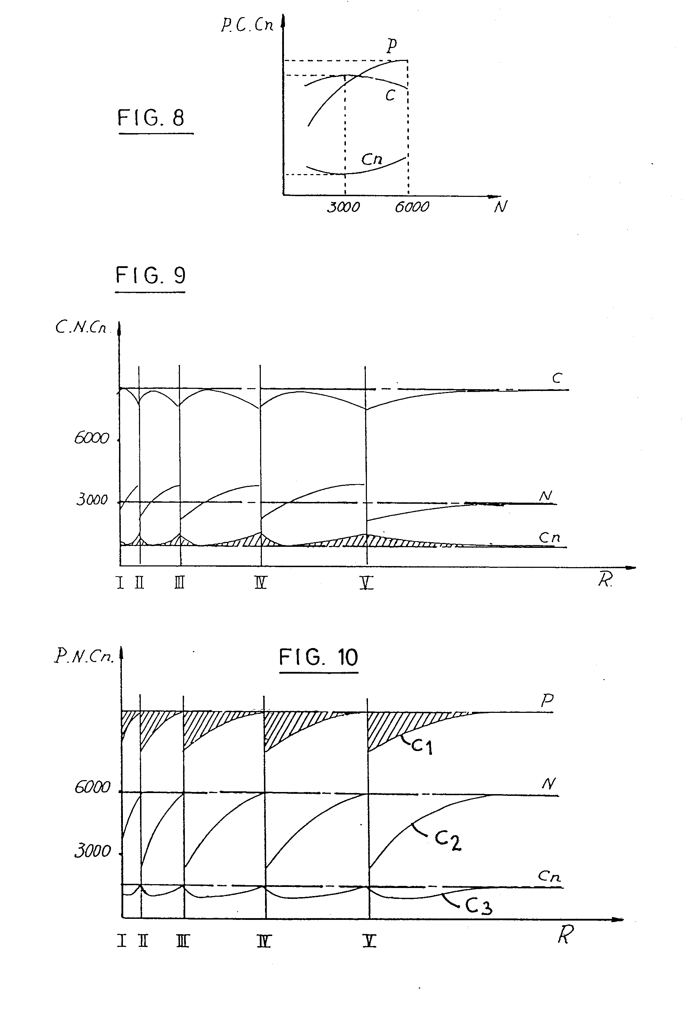

- la figure 8 est un diagramme qui rappelle les caractéristiques de couple, de puissance et de consommation d'un moteur à explosion en fonction de son régime de rotation ;

- la figure 9 est un diagramme comparant l'évolution du couple transmis en fonction de la vitesse d'un véhicule, dans le cas d'une boîte de vitesse selon l'invention à celle d'une boîte conventionnelle, et

- la figure 10 est un diagramme permettant de déterminer le gain de puissance apporté par une forme de réalisation de l'organe de transmission selon l'invention par rapport à une boîte de vitesse conventionnelle.

Dans ces figures, les mêmes notations de référence désignent des éléments identiques ou analogues.

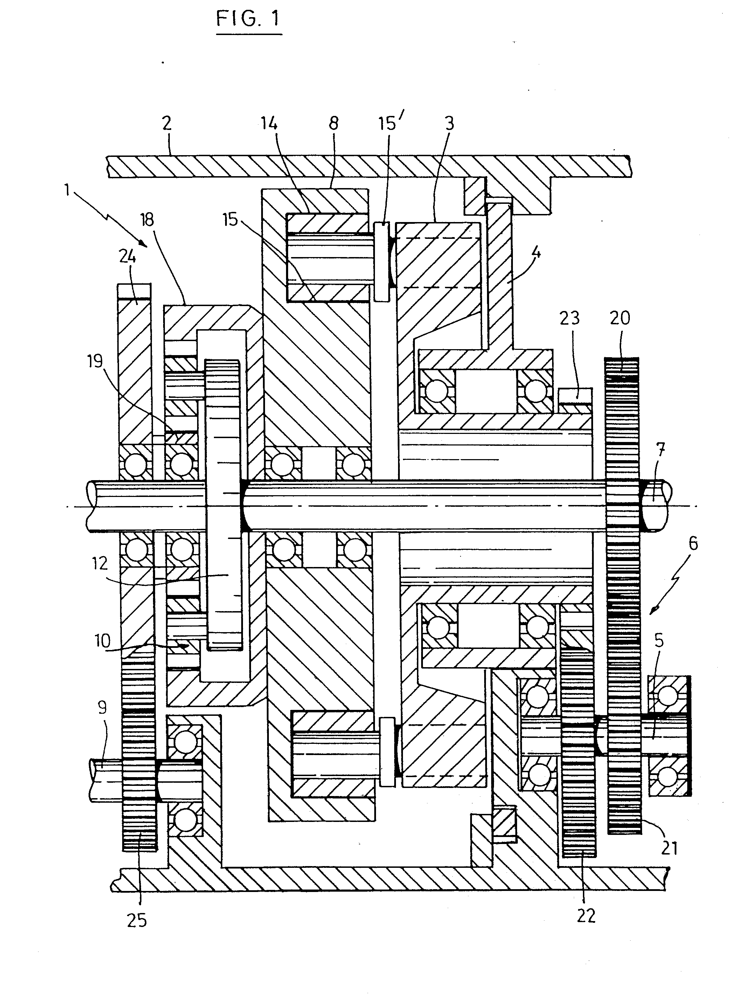

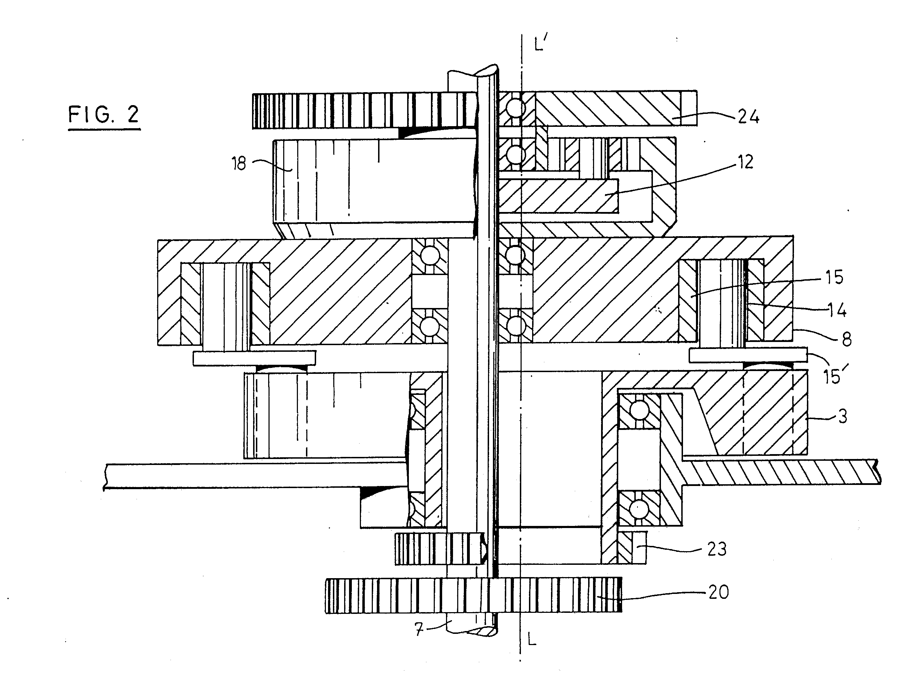

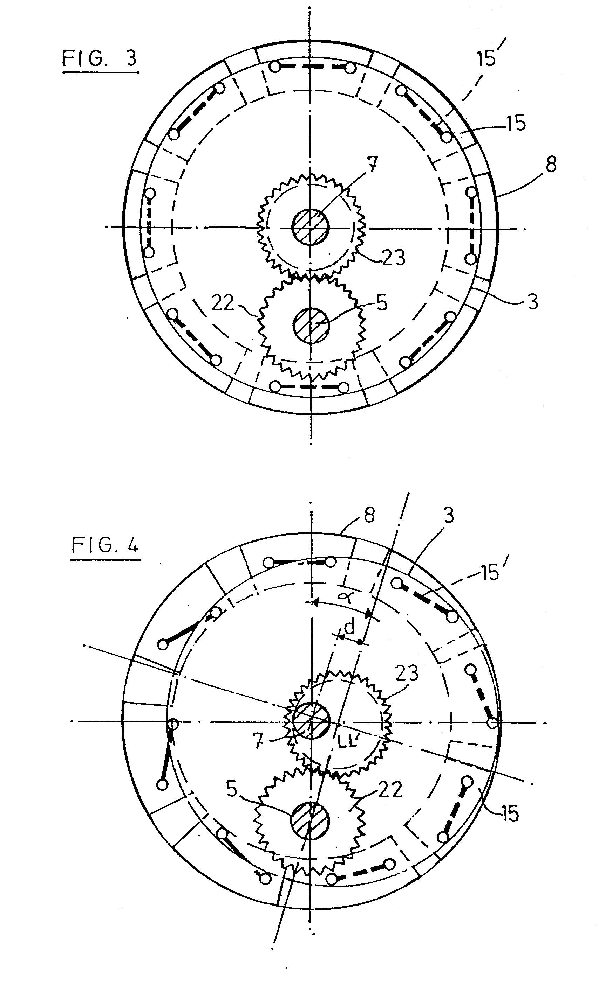

Comme illustré à la figure 1, l'organe de transmission selon l'invention, désigné dans son ensemble par la notation de référence 1, comprend un boîtier 2, un premier plateau 3, monté articulé par un support 4 autour d'un arbre 5 relié par l'intermédiaire d'un premier train d'engrenages 6 à un moteur d'entraînement, un second plateau 8, disposé en face du premier monté mobile sur un arbre d'entrée 7 et solidaire d'un arbre de sortie 9 par l'intermédiaire d'un second train d'engrenages 10 constitué d'un différentiel planétaire et de deux roues dentées 24 et 25 et éventuellement un coupleur hydraulique pour le freinage moteur. L'arbre d'entrée 7 traverse sans le toucher le premier plateau 3. Un alésage réalisé dans ce dernier possède un diamètre suffisant pour lui permettre de dévier d'un angle variable alpha (figures 2 et 4) par rapport à l'axe de rotation du second plateau 8.

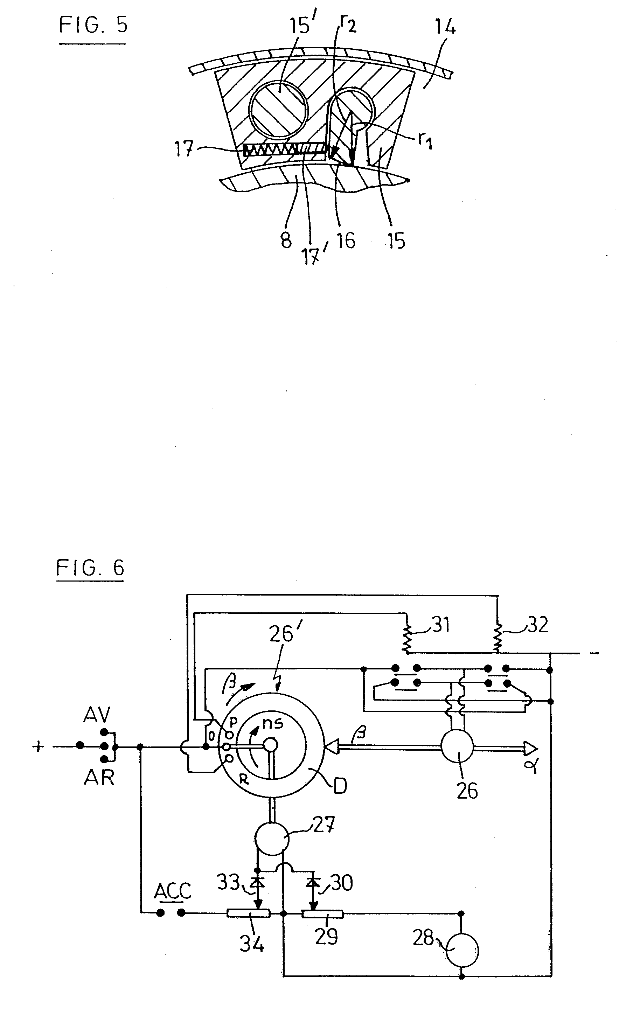

Le second plateau 8 présente une chambre annulaire 14 dans laquelle se trouvent huit patins 15 auto-agrippants unidirectionnels qui sont entraînés par des bielles 15' fixées à la périphérie du premier plateau 3. Chaque patin 15 glisse librement mais sans jeu excessif dans la chambre 14. Il est conçu de telle manière que sous l'action d'un sabot 16 mobile, repoussé par un ressort 17 et un poussoir 17', il adhère au second plateau 8 dans la chambre 14 pour un certain sens de déplacement et glisse pour le déplacement opposé (figure 5).

Le rayon d'usinage du sabot 16 croît de r1 en r2 de telle manière que sous l'action du ressort 17, il y a blocage du patin 15 dans la chambre 14 lorsque ce patin se déplace vers la gauche entraînant avec lui le second plateau. Lorsque la vitesse relative du plateau est plus grande que celle du patin 15, le sabot 16 comprime le ressort 17 et se désolidarise du second plateau.

Lorsque les deux plateaux 3 et 8 sont concentriques, comme illustré à la figure 3, les huit patins se déplacent à la même vitesse angulaire et entraînent le second plateau 8 à une vitesse de rotation identique à celle du premier plateau 3.

Chaque patin 15 placé dans la chambre 14 du second plateau 8 ne peut entraîner ce plateau 8 en rotation que dans un seul sens de déplacement correspondant à celui pour lequel le sabot se bloque dans la chambre 14. Par contre lorsque l'axe L, L' de rotation du premier plateau 3 ne coïncide pas avec celui du second plateau 8, celui-ci entraîné en rotation par l'ensemble des patins 15, constitue une roue libre dont la vitesse de rotation est à tout instant déterminée par le patin animé de la vitesse angulaire la plus grande (figure 4).

Dans l'exemple proposé, le différentiel planétaire 10 comporte 42 dents à une couronne extérieure 18 et 24 dents à un pignon central 19.

Le régime de rotation N du moteur est appliqué à l'arbre 7 du porte-satellites 12. Pour que la vitesse de rotation du pignon central 19 du différentiel planétaire 10 soit nulle, il faut que la couronne extérieure 18 du différentiel tourne à la vitesse :

$$N \times \frac{(24 + 42)}{42} \text{ soit } N \times \frac{33}{21}$$

Ce régime de rotation est assuré par des roues dentées 20 et 21 comportant respectivement 33 et 21 dents. Il est alors transmis au plateau 3 par l'intermédiaire de roues dentées 22 et 23 comportant chacune 27 dents.

Le centre de déviation du support 4 du premier plateau 3 coïncide avec l'axe de rotation de l'arbre 5 de la roue 22. De ce fait, l'entraînement du premier plateau 3 est assuré quel que soit l'angle de déviation alpha, par l'intermédiaire des deux roues dentées 22 et 23.

Les vitesses angulaires du premier plateau 3 et du second plateau 8 sont égales lorsque les deux plateaux 3 et 8 sont concentriques.

Les vitesses d'entrée et de sortie sont alors égales à :

$$\frac{N \times 33}{21}$$

Lorsque l'axe de rotation L, L' du premier plateau 3 est décalé d'une distance d par rapport à l'axe du plateau secondaire (figure 4) la vitesse de chacun des patins dans la chambre devient une variable dont

$$\frac{N \times 33}{21}$$

reste la valeur moyenne. Chaque patin à son tour est animé pendant 45 degrés d'une vitesse supérieure à celle des autres et il entraîne le plateau secondaire en faisant reculer les sept autres patins dans la chambre. Il en résulte que le second plateau 8 est entraîné à une vitesse:

$$\frac{N \times 33}{21} + n$$

n étant l'accroissement variable de zéro à une valeur déterminée en fonction d'une déviation d'un angle alpha.

Cette vitesse de rotation

$$\frac{N \times 33}{21} + n$$

est transmise à la couronne extérieure 18 du différentiel 10 (figure 1). Etant donné que l'arbre 7 du porte-satellites 12 tourne à la vitesse N, il en résulte que le pignon central 19 entraîne par l'intermédiaire de roues dentées 24 et 25 l'arbre de sortie 9 à la vitesse ns, celle-ci étant proportionnelle à n et variant de zéro à une valeur déterminée en fonction de l'angle de déviation alpha.

L'angle de déviation alpha est commandé sous l'action d'un servomoteur 26 qui agit sur le positionnement du support 4 du premier plateau 3.

Le servomoteur 26 reçoit ses impulsions du régulateur automatique 26' (figure 6). Celui-ci se compose essentiellement d'un disque D sur lequel sont fixés deux contacts P et R. Une liaison mécanique venant du servomoteur 26 détermine la position angulaire bêta des contacts proportionnellement à l'angle alpha du plateau primaire. Le contact O est fixé sur la partie mobile d'un appareil de mesure 27 de la vitesse ns. A la vitesse ns = 0, le contact O se place entre les deux contacts P et R qui se trouve en bêta = 0 correspondant à alpha 0. Un détecteur de vitesse 28 monté sur l'arbre de sortie 9 engendre une tension qui est appliquée à l'appareil de mesure 27 par l'intermédiaire d'un potentiomètre 29 et de la diode 30.

Lors d'une accélération il y a liaison électrique entre O et P, P étant un contact de progression, il alimente le servomoteur 26 par l'intermédiaire d'un relais 31 de manière à diminuer le rapport de transmission du variateur de vitesse. Dès que l'angle de déviation alpha augmente, le disque D pivote d'un angle bêta proportionnel à alpha; de ce fait, le contact P s'écarte de O et coupe l'alimentation du servomoteur 26. Il y a accélération dans ce rapport de réduction; le détecteur de vitesse 28 enregistre un accroissement de la valeur de sortie ns, l'appareil de mesure 27 ramène le contact O vers P et ainsi de suite.

Le fonctionnement est identique lors de la décélération par l'intermédiaire du contact de régression R et d'un relais 32 qui alimente le servomoteur 26 de manière à diminuer la valeur de l'angle de déviation alpha en augmentant ainsi le rapport de transmission du variateur de vitesse.

La position du curseur du potentiomètre 29 détermine en fait la consigne de régulation.

En effet, le détecteur de vitesse 28 engendre une tension proportionnelle à la vitesse de sortie ns.

Une fraction de cette tension est transmise à l'appareil de mesure 27. La grandeur de la fraction est déterminée par la position du curseur. A chaque position du curseur correspond une vitesse de sortie ns différente, soit n1, n2, n3 provoquant la déviation du disque D du régulateur 26' en bêta maximum correspondant à l'angle de déviation alpha maximum. A cet instant le rapport de réduction final est Rf.

Ce rapport final Rf est atteint à des valeurs différentes de la vitesse de rotation N de l'arbre d'entrée, soit N1, N2, ... N3 telle que:

$$Rf = \frac{N1}{n1}$$

De la même manière, le rapport de réduction final Rf est atteint à la vitesse n2 en ajustant la position du curseur du potentiomètre 29, de telle manière que la tension appliquée à l'appareil de mesure 27 la vitesse n2 soit la même que celle qui l'était à la vitesse n1. A ce moment :

$$Rf = \frac{N2}{n2}$$

Le rapport de réduction final Rf est donc atteint automatiquement à la vitesse souhaitée lorsqu'on ajuste la position du curseur du potentiomètre 29.

L'alimentation du servo-moteur n'est permise que lorsque le sélecteur marche avant (AV), neutre (Ntre), marche arrière (AR) est en position AV ou AR (figure 6). L'alimentation du circuit de régulation n'est permise que lorsque le sélecteur se trouve en position AV ou AR et que le contact Acc est fermé, ce qui signifie que la pédale d'accélération est légèrement enfoncée. A ce moment, une légère tension provenant de la batterie simule une montée en vitesse de ns et est appliquée à l'appareil de mesure 27 par l'intermédiaire du potentiomètre 34 et la diode 33. Cette légère déviation de l'appareil de mesure 27 provoque la mise en contact de O et P et le processus de régulation est amorcé.

Les diodes 33 et 30 empêchent toute interférence entre le circuit du détecteur de vitesse 28 et le circuit d'amorçage.

Le régulateur de vitesse à consigne variable assure, pendant la période de régulation, une progression de la vitesse de sortie du variateur tout en maintenant le régime de rotation à l'entrée à la valeur réglée.

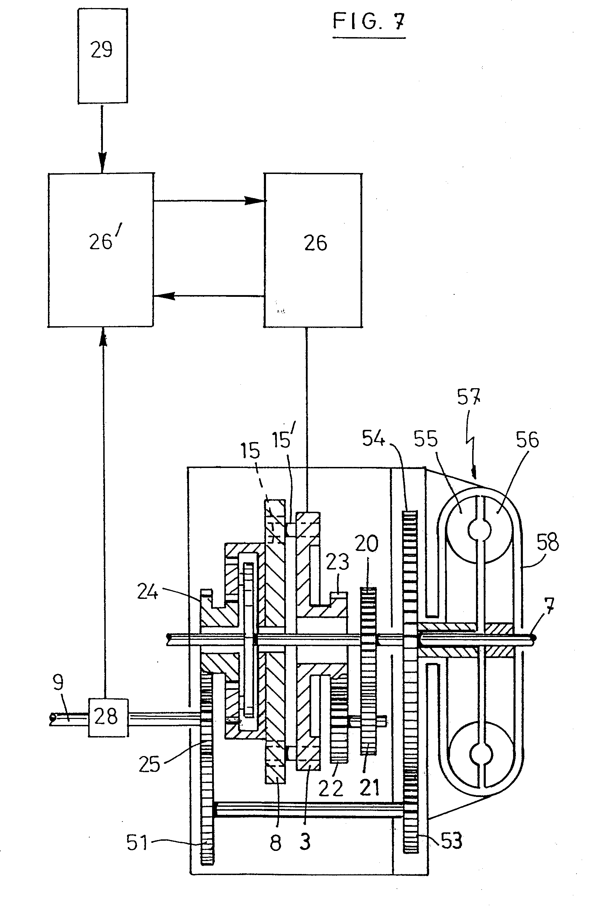

Un freinage moteur est montré à la figure 7. Il est assuré par un coupleur hydraulique 57 comportant une pompe 55 et une turbine 56 immergée dans un carter 58. La pompe 55 montée libre sur l'arbre 7 est entraînée par rétroaction à une vitesse proportionnelle à celle de l'arbre de sortie 9 par les engrenages 25 et 51 et 53-54. Ils présentent un rapport de réduction choisi de manière à entraîner la pompe 55 solidaire de l'engrenage 54 à la vitesse d'entrée N augmentée de la valeur moyenne du glissement existant entre la pompe 55 et la turbine 56. La turbine 56 est calée sur l'arbre d'entrée 7 de l'organe de transmission. De la sorte, dès l'instant où l'accélération n'est plus souhaitée par le conducteur, la turbine 56 propulsée par la pompe 55 assure l'entraînement du moteur à une vitesse sensiblement égale à celle précédant le freinage moteur.

En période de traction, le coupleur hydraulique 57 ne joue aucun rôle, l'entraînement étant assuré par les plateaux primaire 3 et secondaire 8.

Le diagramme 8 rappelle les caractéristiques de couple C, de puissance P et de consommation Cn d'un moteur en fonction de son régime de rotation N. Sur l'exemple choisi, le couple présente son maximum à 3.000 t/min. et la puissance à 6.000 t/min.

Le diagramme 9 compare l'évolution desdites valeurs de C, de N et de Cn pendant la progression en vitesse d'un véhicule. Les courbes en traits continus concernent une boîte conventionnelle à cinq rapports en supposant un démarrage à un régime moyen de 3.000 t/min. dans chacun des rapports. Les courbes en traits discontinus concernent l'organe de transmission selon l'invention en prenant la valeur de consigne N à 3.000 t/min. La surface hachurée entre les deux courbes Cn est représentative du gain de consommation.

Le diagramme 10 compare l'évolution des valeurs de P, de N et de Cn pendant la montée en vitesse d'un véhicule jusqu'à sa valeur maximum. Les courbes $C_1$, $C_2$ et $C_3$ représentent les valeurs pour une boîte conventionnelle à cinq rapports en supposant une accélération jusqu'à 6.000 t/min. dans chaque rapport. Les courbes en traits discontinus se rapportent à l'organe de transmission selon l'invention en fixant la valeur de consigne de N à 6.000 t/min. La surface hachurée entre les deux courbes P est représentative du gain en puissance.

**Revendications**

1. Organe de transmission (1) à variation progressive du rapport de réduction et stabilisation automatique de couple comprenant un boîtier (2), un premier plateau (3) monté mobile dans le boîtier (2) et relié au moteur d'entraînement par l'intermédiaire d'un premier train d'engrenage (6) et un second plateau (8) disposé en face du premier (3) et solidaire d'un arbre de sortie (9) par l'intermédiaire d'un second train d'engrenages (10) caractérisé en ce que le premier plateau (3) est monté articulé autour d'un pignon d'entraînement (22) de manière à permettre que soit modifié, par pivotement, l'excentrement du premier plateau (3) par rapport au second plateau (8) et en ce que le premier plateau (3) est muni, sur une surface voisine du second plateau (8) d'un ensemble de patins (15) auto-agrippants unidirectionnels, répartis uniformément dans une cavité annulaire concentrique (14) aménagée à la périphérie du second plateau (8), chacun des patins (15) étant solidarisés au premier plateau (3) par une série de bielles individuelles (15') articulées d'une part audit patin (15) et d'autre part au premier plateau (3), en des points d'articulation répartis uniformément à la périphérie du premier plateau (3).

2. Organe selon la revendication 1, caractérisé en ce que chaque patin comporte un sabot (16) unidirectionnel destiné à agripper le second plateau (8) lorsqu'il tend à présenter une composante de vitesse dans une direction et un sens prédéterminés, inférieure à celle du patin (15).

3. Organe selon l'une quelconque des revendications précédentes, caractérisé en ce que l'excentrement du premier plateau (3) par rapport au second plateau (8) est modifié sous l'action d'un servomoteur (26).

4. Organe selon l'une quelconque des revendications précédentes caractérisé en ce qu'il comporte à l'étage de sortie un différentiel planétaire (10) reliant le second plateau (8) qui opère la différence entre la vitesse de rotation du second plateau (8) avec celle de l'arbre d'entrée (7), la résultante étant la vitesse variable (ns) de l'arbre de sortie (9).

FIG. 1

0273023

0273023

FIG. 2

0273023

FIG. 3

15'

15

8

7

23

22

5

3

FIG. 4

8

3

15'

α

d

23

7

LL'

5

22

15

0273023

FIG. 5

FIG. 6

0273023

FIG. 7

0273023

FIG. 8

FIG. 9

FIG. 10